# EUROPEAN PATENT SPECIFICATION

(11) **EP 3 055 434 B1**
(45) Date of publication and mention of the grant of the patent: **22.04.2020**
(21) Application number: 14799550.0
(22) Date of filing: 04.11.2014
(51) Int. Cl.: C21B 13/00, C21B 13/02, C22B 1/24

(54) **METHODS AND COMPOSITIONS FOR DECREASING ADHERENCE OF IRON OXIDE PELLETS USED IN DIRECT REDUCTION PROCESSES**
VERFAHREN UND ZUSAMMENSETZUNGEN ZUR REDUZIERUNG DER HAFTUNG VON EISENOXIDPELLETS IN DIREKTREDUKTIONSVERFAHREN
PROCÉDÉS ET COMPOSITIONS PERMETTANT DE RÉDUIRE UNE ADHÉRENCE DE GRANULÉS D'OXYDE DE FER UTILISÉS DANS DES PROCESSUS DE PRÉRÉDUCTION

(30) Priority: 05.11.2013 US 201361900257 P
(43) Date of publication of application: 17.08.2016
(73) Proprietor: Saudi Basic Industries Corporation, Riyadh 11422 (SA)
(72) Inventor: SADDIK, Mohamed Bahgat, Riyadh 11422 (SA); AHSAN, Syed Niaz, Riyadh 11422 (SA)
(74) Representative: Hoefer & Partner Patentanwälte mbB
(86) International application number: PCT/IB2014/065795
(87) International publication number: WO 2015/068104

(56) References cited:
- EP-A2- 0 207 779
- WO-A1-00/65106
- JP-A- H0 280 522

## Description

### CROSS-REFERENCE TO RELATED APPLICATIONS

This Application claims the benefit of priority from U.S. Provisional Application No. 61/900,257, filed on November 5, 2013, which is incorporated herein by reference in its entirety.

### FIELD OF INVENTION

The present invention relates to methods and compositions for reducing stickiness of iron oxide pellets having a cement coating for use in direct reduced (DR) processes.

### BACKGROUND OF THE INVENTION

In the moving-bed shaft direct reduction processes, such as Midrex and HYL III, the avoidance of sticking is important. The tendency to stick imposes an upper limit on the reduction temperature and, hence, on the productivity of the process. In the DR (direct reduction) processes, the product is freshly reduced iron in a solid state. It is, therefore, imperative that the material flow in the reducing module does not form aggregates, blocking the material flow within and out of the reactor. If pellets have little or no tendency to stick, the reduction temperature and thus, throughput, can be increased. It has been reported that an increase of 100 °C in the reduction temperature can bring about a significant increase in throughput. High reduction temperature is also essential to minimize degradation and re-oxidation of reduced product, which is an important factor placing additional emphasis on the sticking behavior of pellets. However, decreasing the reducing temperature to avoid this problem can cause a significant drop in throughput. For example, a decrease from 850 to 750 °C can result in a decrease of up to 30-40% in throughput.

Results from past investigations suggest that sticking is a result of the growth of fibrous iron precipitates (iron whiskers) that become hooked to each other and ultimately become crystallized during the initial stages of metallization. One potential way of preventing the sintering between pellets is therefore to keep the iron surfaces of individual pellets apart. EP 0 207 779 A2 discloses a direct reduction process using a vertical furnace, wherein a cement coating is applied to the surface of iron ore before reducing the iron ore.

Accordingly, there remains a need for DR methods and materials that can provide reduced clustering of direct reduced iron in DR shaft, while maintaining or increasing productivity. This need and other needs are satisfied by the various aspects of the present disclosure.

### SUMMARY OF THE INVENTION

In accordance with the purposes of the invention, as defined in claim 1 and claims 13 and 15 and embodied and broadly described herein, the invention relates to a direct reduction process using a vertical furnace. The process generally comprises the steps of: a) providing a cement mixture comprising water and from about 12 wt.-% to 20 wt.-% cement; b) applying the cement mixture to one or more iron oxide pellets to provide a coated iron oxide pellet having a sticking index of less than or equal to about 5%; c) introducing the coated iron oxide pellet to a vertical furnace; and d) reducing the coated iron oxide pellet in the vertical furnace to metallize the iron oxide in the coated iron oxide pellet at least about 92%, wherein the cement mixture is applied in a ratio of about 0.4 to about 1.0 kg cement/ton iron oxide pellets. According to aspects, the coated particle exhibits a reduced sticking index that is capable of decreasing the sticking or adherence of the iron oxide pellets during the direct reduction process.
In another aspect, the present invention relates to a composition to decrease sticking of direct reduction iron oxide pellets, the composition comprising an iron oxide pellet and a cement mixture comprising from about 12 wt.-% to about 20 wt.-% cement.

In a still further exemplary part of the description, the disclosure relates to a coated iron oxide pellet comprising a cement coating.

In further parts of the description, the disclosure also relates to articles comprising the disclosed coated iron oxide pellets and direct reduced iron made using the disclosed coated iron oxide pellets and methods.

Additional aspects of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

### DETAILED DESCRIPTION OF THE INVENTION

The present invention can be understood more readily by reference to the following detailed description of the invention and the Examples included therein.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Although any methods and materials similar or equivalent to those described herein can be used in the practice or testing of the present invention, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### A. DEFINITIONS

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a cement composition" includes mixtures of two or more cement compositions.

As used herein, the term "combination" is inclusive of blends, mixtures, alloys. reaction products, and the like.

As used herein, the term or phrase "cement" refers to a composition or substance with one or more constituents that is capable of forming cement or binding materials together, once set. Generally, cement can include a number of dry constituents chosen based on the desired ratio or class of cement to be produced. Thus, cement refers to the dry, pre-set composition unless the context clearly dictates otherwise.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent ("wt %") of a component, unless specifically stated to the contrary, is based on the total weight of the formulation or composition in which the component is included. For example if a particular element or component in a composition or article is said to have 8wt%, it is understood that this percentage is relative to a total compositional percentage of 100wt%.

As used herein, the term or phrase "effective," "effective amount," or "conditions effective to" refers to such amount or condition that is capable of performing the function or property for which an effective amount is expressed. As will be pointed out below, the exact amount or particular condition required will vary from one aspect to another, depending on recognized variables such as the materials employed and the processing conditions observed. Thus, it is not always possible to specify an exact "effective amount" or "condition effective to." However, it should be understood that an appropriate effective amount will be readily determined by one of ordinary skill in the art using only routine experimentation.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

### B. IRON OXIDE PELLETS WITH DECREASED ADHERANCE

As briefly described above, the present disclosure relates, in one aspect, to a coated iron oxide pellet for use in a direct reduction (DR) process. As summarized above, the coated iron oxide pellet can exhibit a reduced sticking during a DR process. In one aspect, the coated iron oxide pellet comprises an outer coating. In a further aspect, the coated iron oxide pellet generally comprises an inner core comprising iron oxide and an outer coating comprising cement. In various further aspects, the coated iron oxide pellet comprises iron oxide, silicon oxide, calcium oxide, magnesium oxide, aluminum oxide, carbon, and sulfur.

In various aspects, the coated iron oxide pellet can have any desired shape. In one aspect, the coated iron oxide pellet is in the shape of a sphere or a ball. In a further aspect, the coated iron oxide pellet is formed without any cluster formation.

In a further aspect, the iron oxide comprises hematite (Fe₂O₃; iron (III) oxide), magnetite (Fe₃O₄; triiron tetroxide), limonite (FeO(OH)●n(H₂O); hydrated iron (III) oxide hydroxide), siderite (FeCO₃; iron (II) carbonate), iron pyrite (FeS₂; iron (II) disulfide), goethite (FeO(OH); iron (III) oxide hydroxide), or combinations thereof.

In one aspect, the coated iron oxide pellet comprises iron in an amount ranging from 66.0 wt% to 69.0 wt%, based on the total weight of the coated iron oxide.

In one aspect, the coated iron oxide pellet comprises carbon in an amount ranging from greater than 0 wt% to 0.1 wt%, based on the total weight of the coated iron oxide pellet, including exemplary values 0.02, 0.04, 0.06, and 0.08wt%.

In one aspect, the inner core comprises iron in an amount ranging from 66.0 wt% to 69.0 wt%, based on the total weight of the inner core.

In various aspects, the coating comprises cement. The cement can be present in a ratio from about 0.5 kg to about 1.0 kg cement per ton uncoated iron oxide pellets. In a still further aspect, the cement is present in a ratio from about 0.6 kg to about 1.0 kg cement per ton uncoated iron oxide pellets. In a yet further aspect, the cement is present in a ratio from about 0.7 kg to about 1.0 kg cement per ton uncoated iron oxide pellets. In an even further aspect, the cement is present in a ratio from about 0.8 kg to about 1.0 kg cement per ton uncoated iron oxide pellets. In a still further aspect, the cement is present in a ratio from about 0.9 kg to about 1.0 kg cement per ton uncoated iron oxide pellets. In a yet further aspect, the cement is present in a ratio from about 0.5 kg to about 0.9 kg cement per ton uncoated iron oxide pellets. In an even further aspect, the cement is present in a ratio from about 0.5 kg to about 0.8 kg cement per ton uncoated iron oxide pellets. In a still further aspect, the cement is present in a ratio from about 0.5 kg to about 0.7 kg cement per ton uncoated iron oxide pellets. In a yet further aspect, the cement is present in a ratio from about 0.5 kg to about 0.6 kg cement per ton uncoated iron oxide pellets.

In a further aspect, the cement is present in a ratio from about 0.4 kg to about 1.0 kg cement per ton uncoated iron oxide pellets. In a yet further aspect, the cement is present in a ratio from about 0.4 kg to about 0.9 kg cement per ton uncoated iron oxide pellets. In an even further aspect, the cement is present in a ratio from about 0.4 kg to about 0.8 kg cement per ton uncoated iron oxide pellets. In a still further aspect, the cement is present in a ratio from about 0.4 kg to about 0.7 kg cement per ton uncoated iron oxide pellets. In a yet further aspect, the cement is present in a ratio from about 0.4 kg to about 0.6 kg cement per ton uncoated iron oxide pellets.

In a further aspect, the cement is present in a ratio of at least about 0.5 kg cement per ton uncoated iron oxide pellets, for example, at least about 0.6, 0.7, 0.8, or 0.9 kg cement per ton uncoated iron oxide pellets.

In a further aspect, the cement is present in a ratio of at least about 0.4 kg cement per ton uncoated iron oxide pellets, for example, at least about 0.5, 0.6, 0.7, 0.8, or 0.9 kg cement per ton uncoated iron oxide pellets.

In various aspects, the coating can further optionally comprise one or more additional components. In one aspect, the cement further comprises an aggregate component. In a further aspect, the aggregate component comprises sand, gravel, limestone, granite, marble, or stone, or a combination thereof. In a still further aspect, the aggregate component comprises fine aggregate or course aggregate, or a combination thereof. In this aspect, the aggregate can have various particle sizes and distributions.

In various aspects, the coating can optionally comprise at least one additional chemical component. In a further aspect, the chemical component comprises an accelerator, a retarder, a plasticizer, a superplasticizer, a pigment, a corrosion inhibitor, a bonding agent, or a pumping agent, or a combination thereof.

In one aspect, the composite iron oxide pellet can have any desired average pellet size. In a further aspect, the average pellet size can range from about 10 mm to 15 mm.

In various aspects, the coated iron oxide pellet exhibits at least one improved property. For example, the coated iron oxide pellet can exhibit an improved physical, mechanical, chemical, or metallurgical property, or any combination thereof.

In one aspect, the coated iron oxide pellets exhibit a sticking index of less than or equal to 5.0 %, including exemplary values of 4.7, 4.5, 4.3, 4.0, 3.7, 3.5, 3.3, and 3.0 %. In a further aspect, the sticking index can be in a range derived from any two of the above listed exemplary values. For example, the sticking index can range from 3.0 % to 5.0 %.

### C. METHODS OF MAKING THE COATED IRON OXIDE PELLETS

Also disclosed herein are methods of making the coated iron oxide pellets described above. In one aspect, the invention provides a process for preparing a coated iron oxide pellet. The process generally comprises: a) providing a cement mixture comprising water and from about 12 wt.-% to about 20 wt.-% cement; b) applying the cement mixture to iron oxide pellet having a sticking index of less than or equal to about 5% to provide a coated iron oxide pellet; and c) drying the coated iron oxide pellet. The process further comprises introducing the coated iron oxide pellet to a vertical furnace, and reducing the coated iron oxide pellet in the vertical furnace to metallize the iron oxide in the coated iron oxide pellet at least about 92%, wherein the cement mixture is applied in a ratio of about 0.4 to about 1.0 kg cement/ton iron oxide pellets. In some aspects, the cement mixture further comprises a binder.

The cement mixture comprises cement and water, *e.g.,* a cement- water slurry. In a further aspect, the cement mixture can further optionally comprise one or more additional components. Thus, according to various aspects of invention, the cement mixture further comprises an aggregate component. In a further aspect, the aggregate component comprises sand, gravel, limestone, granite, marble, or stone, or a combination thereof. In a still further aspect, the aggregate component comprises fine aggregate or course aggregate, or a combination thereof. In this aspect, the aggregate can have various particle sizes and distributions. In a still further aspect, the coating can optionally comprise at least one additional chemical component. In a further aspect, the chemical component is an accelerator, a retarder, a plasticizer, a superplasticizer, a pigment, a corrosion inhibitor, a bonding agent, or a pumping agent, or a combination thereof.

It is to be understood that the combined weight percent value of all components does not exceed about 100 wt% and all weight percent values are based on the total weight of the composition, such as for example the total weight of the cement mixture composition. Thus, if an exemplary cement mixture is described as having from about 18 wt% to about 22 wt% cement, the balance of the wt% of the composition, less any optional additional components, can be water.

Typically, any cement can be used. In one aspect, the cement comprises hydraulic cement. In a further aspect, the cement comprises Portland cement, for example, Ordinary Portland Cement (OPC) Type I, Type IA, Type II, Type IIA, Type III, Type IIIA, Type IV, or Type V, or a combination thereof. In a yet further aspect, the non-hydraulic cement is a pozzolan-lime cement, slag-lime cement, supersulfated cement, calcium sulfoaluminate cement, natural cement, or geopolymer cement.

In a further aspect, the cement is a blended hydraulic cement comprising a Portland cement. In a still further aspect, the blended hydraulic cement is a Type IP, Type IS, or Type IT(AX)(BY) blended hydraulic cement. In an even further aspect, the cement comprises masonry cement, for example, a mortar or the like. In a still further aspect, the cement is in the dry form. If needed to set, water is typically added after the cement is mixed with the other components, for example, to form a cement-water slurry, and it is then ready to be applied. In a further aspect, the water and one or more components are mixed with the cement simultaneously

In various aspects, the coated iron oxide pellets of the present invention can be manufactured by various methods. Thus, in aspects of the invention, providing a cement mixture comprising water and from about 12 wt% to about 20 wt% cement; applying the cement mixture to iron oxide pellet to provide a coated iron oxide pellet having a sticking index of less than or equal to about 5% can involve mixing uncoated iron oxide pellets, the cement mixture of the present invention, wherein the cement mixture is applied in a ratio of about 0.4 to about 1.0 kg/ ton iron oxide pellets and optional additional components using conventional methods such as with an intensive mixer, such as a R02 Eirich mixer or any other mixing equipment.

Alternatively, because of the availability of spraying equipment in commercial processing facilities, applying said cement mixture to iron oxide pellet can involve various spraying methods to apply the cement mixture to the iron oxide pellets. In various further aspects, the equipment used in such processing methods includes, but is not limited to, the following: shower spray and various other types of equipment.

In various aspects, the drying step, *i.e.,* step (c) in the foregoing, removes at least substantially all of the water initially present in the cement mixture applied to the iron oxide pellet.

In various aspects, the iron coated pellet is air dried during the transit on a conveyor belt following application by spraying to the DRI furnace charging point. Alternatively, in a further aspect, the iron composite pellet can be dried using conventional methods, such as, for example, in the sun for a period of 1 hour to about 4 days or heating in a drying oven.

### D. METHODS OF USING THE COATED IRON OXIDE PELLETS

Also disclosed herein are methods of using the coated iron oxide pellets described herein above where decreased adherence of iron oxide pellet is needed. In various aspects, the coated iron oxide pellet of the disclosure can be used to produce iron by various methods. In one aspect, the coated iron oxide pellet of the present invention can in the production of direct reduced iron (DRI). For example, the coated iron oxide pellet can be used in DRI production using conventional methods such as, in the presence of a reducing agent in a furnace, for example, a MIDREX furnace, or HYL III furnace, or any other DRI production equipment.

Direct reduction ("DR") of iron, e.g. iron oxide or iron ore, generates metallic iron in solid form, also referred to as direct reduced iron ("DRI"), by removing oxygen using a reducing gas comprising hydrogen and carbon monoxide. In some cases, the reducing gas can be provided from the synthesis gas obtained from natural gas by steam methane reforming. Alternatively, the reducing gas can be produced in situ in the reducing reactor from supplied natural gas and oxygen. The reducing process can be illustrated by the following chemical reaction, where water and carbon dioxide are obtained as reaction byproducts:

Fe₂O₃ + H₂ → 2Fe + 3H₂O

Fe₂O₃ + CO → 2Fe + CO₂

Iron obtained from a DR process can be cooled and carbonized, e.g. by counterflowing gases in the lower portion of a direct reduction reactor according to the following reaction:

3Fe + CO + H₂ → Fe₃C + H₂O

3Fe + CH₄ → Fe₃C + 2H₂

3Fe + 2CO → Fe₃C + CO₂

By the foregoing chemical processes, products such as cold direct reduction iron, hot briquetted iron, and hot direct reduction iron can be manufactured.

In addition to the chemical reactions described herein above, methane reforming and water gas shift reactions can also occur in the gas phase based on the composition of the input reduction gas and operating temperatures in the reduction reaction vessel. These additional gas phase reactions include the following:

CH₄ + 2H₂O → CO₂ + 4H₂

CO₂ + H₂ → CO + H₂O

Thus, the gas exiting a direct reduction reactor, i.e. off-gas or top gas, comprises both unreacted gases present in the input reducing gas mixture and the gaseous reaction products illustrated in the reactions above. In addition, the input reducing gas mixture can comprise additional components such nitrogen. The top gas is a complex gaseous mixture comprising nitrogen, methane, water vapor, hydrogen, carbon dioxide, and carbon monoxide. In various DR processes, the top gas can be cleaned by scrubbing and carbon dioxide removed. For example, the top gas, following scrubbing and carbon dioxide removal, can be recycled back into the reducing gas stream and utilized for further direct reduction of iron.

In various aspects, the direct reduction process comprises a first module for reducing iron oxide comprising a first reducing gas inlet, a first reducing reactor, and a top gas outlet; wherein the first module, during operation, produces metallic iron and expels a top gas via the top gas outlet. An example of the first module for reducing iron by a direct reduction process is a production module or plant commonly using the Midrex® direct reduction process. In a further aspect, the first module for reducing iron oxide by direct reduction process utilizes a Midrex® direct reduction process and comprises a first reducing gas inlet, a first reducing reactor, and a top gas outlet, wherein the first module, during operation, produces metallic iron and expels a top gas via the top gas outlet.

In various aspects, the first module direct reduction process can be characterized by use of a low pressure reducing gas introduced to a moving bed shaft reactor where the reducing gas moves counter-current to the lump iron oxide (or alternatively, lump iron oxide pellets). In this case, the reducing gas (from about 10 mol% to about 20 mol% CO; and from about 80 mol% to about 90 mol% H₂) of the first module direct reduction process is typically produced from natural gas using a CO2 reforming process in combination with a catalyst, e.g. Midrex reforming process with the Midrex proprietary catalyst. The first module direct reduction process is further characterized by a single reformer rather than a reformer / heater combination and by lack of a requirement to cool the reducing gas prior to introduction to the shaft reactor.

In various aspects, the first reducing reactor is a moving bed shaft reactor. Appropriate reactor designs are commercially available from Midrex Technologies, Inc. (Charlotte, North Carolina, US). In a further aspect, the first reducing reactor comprises a vertical cylindrical vessel containing an internal refractory insulation, wherein the iron oxide flows down by gravity and is contacted by an upward flowing reducing gas. In a still further aspect, the iron oxide is present as iron oxide pellets or lump iron ore.

In a further aspect, the first reducing gas inlet introduces to the first reducing reactor a reducing gas at a pressure from about 1 bar to about 1.5 bar at a temperature from about 800 °C to about 850 °C. The reducing gas can generally be formed natural gas or other gaseous stream that can be reformed or cracked to produce H₂ or CO to be used in the reduction of the iron oxide. In general, high methane containing natural gas is the most common form of input gas for the formation of the reducing gas. The input gas may be a byproduct of other processes. In a still further aspect, the reducing gas mixture is formed from natural gas and water. In a yet further aspect, the reducing gas mixture comprises carbon monoxide and hydrogen.

Alternatively, the direct reduction process comprises a first module for reducing iron oxide comprising a first reducing gas inlet, a reducing reactor, a reducing gas heater, and a steam boiler; wherein the first module, during operation, produces metallic iron; and wherein the reducing reactor, during operation, produces metallic iron and operates at a pressure of at least about 5 bar. An example of the alternative first module for reducing iron by a direct reduction process is a production module or plant commonly using the HYL® direct reduction process. In a further aspect, the first module for reducing iron oxide by direct reduction process utilizes a HYL® direct reduction process comprising a reducing gas inlet, a reducing reactor, a reducing gas heater, and a steam boiler, wherein the reducing reactor, during operation, produces metallic iron; and wherein the second module, during operation, produces metallic iron and operates at a pressure of at least about 5 bar.

The alternative first module direct reduction process is characterized by use of a high pressure reducing gas introduced to a moving bed shaft reactor where the reducing gas moves counter-current to the lump iron oxide (or alternatively, lump iron oxide pellets). In this case, the reducing gas is generated by self-reforming in the second reduction reactor, with make-up gas - typically natural gas - being provided to the reducing gas circuit and injecting oxygen at the inlet of the second reducing reactor. The HYL®-type direct reduction process is further characterized by a reducing gas heater. The HYL®-type direct reduction process can optionally comprise a steam methane reforming unit.

In various aspects, the reducing reactor is a moving bed shaft reactor. Appropriate reactor designs are commercially available from Tenova HYL (Coraopolis, Pennsylvania, US). In a further aspect, the reducing reactor comprises a vertical cylindrical vessel, wherein iron oxide is introduced to the second reducing reactor via a sealing mechanism that is based upon a pressure lock system. In a still further aspect, once the iron oxide is introduced in the second reducing reactor, it flows down by gravity and is contacted by an upward flowing reducing gas. In a still further aspect, the iron oxide is present as iron oxide pellets, lump iron ore, or mixture thereof.

It is understood in the foregoing discussion that reference to iron oxide comprises the coated iron oxide pellets of the present invention. Moreover, the coated iron oxide pellets of the present invention can be utilized in other direct reduction processes as known to one skilled in the art.

In use, the coated iron oxide pellets are used in a direct reduction iron process. Thus, in an exemplary aspect, disclosed is a process comprising: a) providing a cement mixture comprising water and from about 12 wt% to about 20 wt% cement; b) applying the cement mixture to iron oxide pellets to provide a coated iron oxide pellet having a sticking index of less than or equal to about 5%; c) introducing the coated iron oxide pellet to a vertical furnace; and d) reducing the coated iron oxide pellet in the vertical furnace to metallize the iron oxide in the coated iron oxide pellet at least about 92%, wherein the cement mixture is applied in a ratio of about 0.4 to about 1.0 kg cement/ton iron oxide pellets. It is understood that the cement mixture applied to the iron oxide pellet is as described herein above.

In various aspects, the coated iron oxide pellet has an improved sticking index, *i.e.,* a sticking index less than that of an iron oxide pellet lacking the cement coating of the present invention. In a further aspect, the sticking index of the coated iron oxide pellet is less than or equal to about 10%, is less than or equal to about 9%, is less than or equal to about 8%, is less than or equal to about 7%, is less than or equal to about 6%, is less than or equal to about 5%, is less than or equal to about 4%, is less than or equal to about 3%, is less than or equal to about 2%, or is less than or equal to about 1%.

In various aspects, the coated iron oxide pellet is highly metallized following reduction in the vertical furnace. In still further aspect, the metallization of the iron oxide pellet after reduction in the vertical furnace is at least about 92%, is at least about 93%, is at least about 94%, is at least about 95%, is at least about 96%, is at least about 97%, is at least about 98%, or is at least about 99%.

In one aspect, the invention provides an iron oxide-reducing system comprising: a) a module for reducing iron oxide by direct reduction process, the module comprising a reducing gas inlet, a reducing reactor, and a top gas outlet; b) providing the disclosed coated iron oxide pellet to the reducing reactor; c) carrying out direct reduction of the coated iron oxide pellet; and d) expel the reduced iron from the reducing reactor.

Optionally, in various aspects, the disclosed system, apparatus, and methods can be operated or performed on an industrial scale. In one aspect, the system, apparatus, and methods disclosed herein can be configured to produce the coated iron oxide pellets with decreased adherance of the invention on an industrial scale. For example, according to further aspects, the apparatus and methods can produce batches of coated iron oxide pellets with decreased adherence on an industrial scale. In a further aspect, the batch size can comprise any desired industrial-scale batch size. In a still further aspect, the batch size can optionally be at least about 22.7 kg, including exemplary batch sizes of at least about 45.4 kg, at least about 90.7 kg, at least about 113.4 kg, at least about 136.1 kg, at least about 158.8 kg, at least about 181.4 kg, at least about 204.1 kg, at least about 226.8 kg, at least about 272.2 kg, at least about 317.5 kg, at least about 362.9, at least about 408.2 kg, at least about 453.6 kg, or greater. In a yet further aspect, the batch size can optionally be at least about 1 ton, including exemplary batch sizes of at least about 10 tons, at least about 25 tons, at least about 50 tons, at least about 100 tons, at least about 250 tons, at least about 500 tons, at least about 750 tons, at least about 1000 tons, at least about 2,500 tons, or greater. In an additional aspect, the batch size can optionally range from about 1 ton to about 2,500 tons, such as, for example, from about 10 tons to about 1,000 tons, from about 1,000 tons to about 2,500 tons, from about 100 tons to about 500 tons, from about 500 tons to about 1,000 tons, from about 10 tons to about 100 tons, from about 100 tons to about 250 tons, from about 500 tons to about 750 tons, or from about 750 tons to about 1,000 tons.

In various aspects, the disclosed system, apparatus, and methods can be operated or performed on any desired time scale or production schedule that is commercially practicable. In various aspects, the disclosed system, apparatus, and methods can produce a quantity of at least 22.7 kg of coated iron oxide pellets with decreased adherance in a period of 1 day or less, including exemplary quantities of at least about 45.4 kg, at least about 90.7 kg, at least about 113.4 kg, at least about 136.1 kg, at least about 158.8 kg, at least about 181.4 kg, at least about 204.1 kg, at least about 226.8 kg, at least about 272.2 kg, at least about 317.5 kg, at least about 362.9, at least about 408.2 kg, at least about 453.6 kg. In various further aspects, the disclosed system, apparatus, and methods can produce a quantity of at least 1 ton of coated iron oxide pellets with decreased adherance in a period of about 1 day or less, including exemplary quantities of at least about 10 tons, 100 tons, 500 tons, or 1000 tons, or greater within the period. In a further aspect, the period of time can be about 2 days, 3 days, 4 days, 5 days or less, 6 days, 7 days, or greater. In a still further aspect, the period of time can be 4 hours, including exemplary times of 8 hours, 12 hours, 18 hours, 24 hours, 36 hours, 48 hours, 60 hours, or greater. In a still further aspect, the quantity of coated iron oxide pellets produced can range from about 1 ton to about 100 tons, and the period of time can range from about 1 hour to about 1 day, for example, 100-1000 tons in a period of 1 to 24 hours. In a yet further aspect, the quantity of coated iron oxide pellets produced can range from about 45.4 kg to about 453.6 kg, and the period of time can range from about 1 hour to about 1 day, for example, 45.4 kg-453.6 kg in a period of 1 to 24 hours.

In additional aspects, the components of the disclosed system and apparatus can be shaped and sized to permit production of coated iron oxide pellets on an industrial scale. Similarly, it is contemplated that the components of the disclosed system and apparatus can comprise materials having material properties that are configured to permit production of coated iron oxide pellets with decreased adherence on an industrial scale. In further aspects, the components of the disclosed system and apparatus can be shaped and sized to produce coated iron oxide pellets with decreased adherance in accordance with the desired time scale or production schedule. Similarly, it is contemplated that the components of the disclosed system and apparatus can comprise materials having material properties that are configured to permit production of coated iron oxide pellets with decreased adherence in accordance with the desired time scale or production schedule.

### E. ASPECTS

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present invention is not entitled to antedate such publication by virtue of prior invention. Further, the dates of publication provided herein can be different from the actual publication dates, which can require independent confirmation.

### F. EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers *(e.g.,* amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt %.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only routine experimentation, if any, will be required to optimize such process conditions. Several methods for preparing the compounds of this invention are illustrated in the following prophetic examples.

### Example 1.

In one aspect, Table 1 below shows the typical analysis of iron ore or oxide fines that can comprise the coated iron oxide pellets. In further aspects, other ingredients can include various amounts of carbon, sulfur, sodium, potassium, zinc, chlorine, fluorine, and/or water.

**Table 1.***

| Element | Iron oxide pellet |
|---|---|
| Fe-Tot | 65.7 |
| Fe₂O₃ | 96.6 |
| MgO | 0.8 |
| Al₂O₃ | 0.3 |
| SiO₂ | 0.8 |
| P₂O₅ | 0.2 |
| SO₃ | 0.0 |
| CaO | 0.6 |
| TiO₂ | 0.0 |
| V₂O₅ | 0.0 |
| MnO | 0.6 |
| ZnO | 0.0 |
| PbO | 0.0 |
| Others | 0.0 |
| Total | 100.0 |

| | |
|---|---|
| * Amounts provided in terms of percent of total composition (by weight). | |

In one aspect, the outer coating can be prepared by pre-blending all outer coating constituents comprising cement in a dry-blend and mixed for a desired duration. The outer coating pre-blend is then mixed with water to form a cement-water slurry comprising from about 12 wt% to about 20 wt% cement. The cement-water slurry can then be applied directly to the iron oxide pellets using a coating device, e.g. a sprayer, and dried, e.g. at a suitable temperature for a suitable duration. In some aspects, coated iron oxide pellets can be air dried at ambient temperature, e.g. about 15 °C to about 45 °C. In other aspects, coated iron oxide pellets can be heat dried. In various aspects, the final coated iron oxide pellets can comprise cement in a ratio of from about 0.5 kg to about 1.0 kg cement/ton iron oxide pellets.

In a further aspect, the outer coating can be prepared by pre-blending all outer coating constituents comprising cement in a dry-blend and mixed for a desired duration. The outer coating pre-blend can then mixed with water to form a cement-water slurry comprising from about 12 wt% to about 20 wt% cement. The cement-water slurry can then be applied directly to the iron oxide pellets using a coating device, e.g. a sprayer, and dried, e.g. at a suitable temperature for a suitable duration. In some aspects, coated iron oxide pellets can be air dried at ambient temperature, e.g. about 15 °C to about 50 °C. In other aspects, coated iron oxide pellets can be heat dried. In various aspects, the final coated iron oxide pellets can comprise cement in a ratio of from about 0.5 kg to about 1.0 kg cement/ton iron oxide pellets.

In one aspect, the outer coating can be prepared by pre-blending all outer coating constituents comprising cement in a dry-blend and mixed for a desired duration. The outer coating pre-blend can then be mixed with water to form a cement-water slurry comprising from about 20 wt% cement and the balance of the wt% can be water. The cement-water slurry can then be applied directly to the iron oxide pellets using a sprayer, and air-dried at about 15 °C to about 45 °C. In other aspects, coated iron oxide pellets can be heat dried. In various aspects, the final coated iron oxide pellets can comprise cement in a ratio of about 0.5 kg cement/ton iron oxide pellets.

### DETERMINING STICKING INDEX (SI)

In one aspect, the present methods can provide coated iron oxide pellets having reduced adherence. In one aspect, the sticking index of the coated iron oxide pellets can be determined by dropping the clustered pellets consisting of at least two pellets from a height of 1 m against a hard surface multiple times. In a further aspect, the clusters remaining after each drop are then calculated, and the results expressed as a percentage of clusters remaining after each drop. After all drops are performed, the number of drops versus percentage of clusters is plotted using methods known to those of skill in the art. In a still further aspect, the sticking index (SI) can then be calculated using the area under the curve. In one aspect, SI is zero when no clusters of at least two pellets form, and SI is 100 when all pellets are clustered and do not disaggregate during dropping.

### DETERMINING METALLIZATION

In one aspect, the present methods can provide coated iron oxide pellets having improved metallization. In one aspect, the metallization of the coated iron oxide pellets can be determined by testing the coated iron oxide pellet after isothermal reduction of the coated iron oxide pellet on a fixed bed at 995 °C, using reducing gases consisting of 40% CO and 60% H₂.

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

### DETERMINING METALLIZATION

In one aspect, the present methods can provide coated iron oxide pellets having improved metallization. In one aspect, the metallization of the coated iron oxide pellets can be determined by testing the coated iron oxide pellet after isothermal reduction of the coated iron oxide pellet on a fixed bed at 995 °C, using reducing gases consisting of 40% CO and 60% H₂.

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A direct reduction process using a vertical furnace, the process comprising:
(a) providing a cement mixture comprising water and from about 12 wt% to about 20 wt% cement;
(b) applying the cement mixture to iron oxide pellets to provide a coated iron oxide pellet having a sticking index of less than or equal to about 5%;
(c) introducing the coated iron oxide pellet to a vertical furnace; and
(d) reducing the coated iron oxide pellet in the vertical furnace to metallize the iron oxide in the coated iron oxide pellet at least about 92%;
wherein the cement mixture is applied in a ratio of about 0.4 to about 1.0 kg cement/ton iron oxide pellets.

2. The process of claim 1, wherein the cement mixture is applied in a ratio of about 0.4 to about 0.6 kg cement/ton iron oxide pellets.

3. The process of claims 1-2, wherein the cement mixture is applied in a ratio of about 0.5 kg cement/ton iron oxide pellets.

4. The process of any of claims 1-3, wherein the cement mixture comprises a hydraulic cement.

5. The process of claim 4, wherein the cement is a hydraulic cement.

6. The process of claim 5, wherein the hydraulic cement is a Portland Cement.

7. The process of claim 6, wherein the Portland Cement is per ASTM C-150 a Type I, Type IA, Type II, Type IIA, Type III, Type IIIA, Type IV, or Type V Portland Cement.

8. The process of claim 4, wherein the hydraulic cement is a blended hydraulic cement.

9. The process of claim 8, wherein the blended hydraulic cement is a Type IP, Type IS, or Type IT(AX)(BY) blended hydraulic cement.

10. The process of any of claims 1-7, further comprising reduction in the vertical furnace at a temperature of about 995 °C.

11. The process of any of claims 1-10, wherein the cement mixture comprises from about 12 to about 18 wt% cement, in particular about 12 wt% cement.

12. The process of any of claims 1-11, wherein applying the cement mixture is spraying the cement mixture directly onto the iron oxide pellets.

13. A composition to decrease sticking of direct reduction iron oxide pellets, the composition comprising an iron oxide pellet and a cement mixture comprising water and from 12 wt% to 18 wt% cement.

14. A composition according to claim 13 comprising about 12 wt% cement.

15. A coated iron oxide particle obtained according to the process of claim 1 wherein the cement is present in a ratio of about 0.4 to about 1.0 kg cement/ton uncoated iron oxide pellets.

## Patentansprüche

1. Direktreduktionsverfahren unter Verwendung eines vertikalen Ofens, wobei das Verfahren umfasst:
(a) Bereitstellen eines Zementgemisches, umfassend Wasser und etwa 12 Gew.-% bis etwa 20 Gew.-% Zement;
(b) Aufbringen des Zementgemisches auf Eisenoxidpellets, wobei ein überzogenes Eisenoxidpellet mit einem Haftindex von weniger als oder gleich etwa 5 % bereitgestellt wird;
(c) Einbringen des überzogenen Eisenoxidpellets in einen vertikalen Ofen; und
(d) Reduzieren des überzogenen Eisenoxidpellets in dem vertikalen Ofen, um das Eisenoxid in dem überzogenen Eisenoxidpellet zu mindestens etwa 92 % zu metallisieren;
wobei das Zementgemisch in einem Verhältnis von etwa 0,4 bis etwa 1,0 kg Zement/Tonne Eisenoxidpellets aufgebracht wird.

2. Verfahren nach Anspruch 1, wobei das Zementgemisch in einem Verhältnis von etwa 0,4 bis etwa 0,6 kg Zement/Tonne Eisenoxidpellets aufgebracht wird.

3. Verfahren nach den Ansprüchen 1-2, wobei das Zementgemisch in einem Verhältnis von etwa 0,5 kg Zement/Tonne Eisenoxidpellets aufgebracht wird.

4. Verfahren nach einem der Ansprüche 1-3, wobei das Zementgemisch einen hydraulischen Zement umfasst.

5. Verfahren nach Anspruch 4, wobei der Zement ein hydraulischer Zement ist.

6. Verfahren nach Anspruch 5, wobei der hydraulische Zement ein Portlandzement ist.

7. Verfahren nach Anspruch 6, wobei der Portlandzement nach ASTM C-150 ein Portlandzement vom Typ I, Typ IA, Typ II, Typ IIA, Typ III, Typ IIIA, Typ IV oder Typ V ist.

8. Verfahren nach Anspruch 4, wobei der hydraulische Zement ein gemischter hydraulischer Zement ist.

9. Verfahren nach Anspruch 8, wobei der gemischte hydraulische Zement ein gemischter hydraulischer Zement vom Typ IP, Typ IS oder Typ IT(AX)(BY) ist.

10. Verfahren nach einem der Ansprüche 1-7, ferner umfassend Reduktion in dem vertikalen Ofen bei einer Temperatur von etwa 995 °C.

11. Verfahren nach einem der Ansprüche 1-10, wobei das Zementgemisch etwa 12 bis etwa 18 Gew.-% Zement, insbesondere etwa 12 Gew.-% Zement umfasst.

12. Verfahren nach einem der Ansprüche 1-11, wobei Aufbringen des Zementgemisches Sprühen des Zementgemisches direkt auf die Eisenoxidpellets ist.

13. Zusammensetzung zum Reduzieren von Haftung von Direktreduktions-Eisenoxidpellets, wobei die Zusammensetzung ein Eisenoxidpellet und ein Zementgemisch, umfassend Wasser und 12 Gew.-% bis 18 Gew.-% Zement, umfasst.

14. Zusammensetzung gemäß Anspruch 13, umfassend etwa 12 Gew.-% Zement.

15. Gemäß dem Verfahren von Anspruch 1 erhaltenes, überzogenes Eisenoxidteilchen, wobei der Zement in einem Verhältnis von etwa 0,4 bis etwa 1,0 kg Zement/Tonne nicht-überzogene Eisenoxidpellets vorhanden ist.

## Revendications

1. Procédé de réduction directe utilisant un four vertical, le procédé comprenant :
(a) fournir un mélange de ciment comprenant de l'eau et d'environ 12% en poids à environ 20% en poids de ciment ;
(b) appliquer le mélange de ciment à des pastilles d'oxyde de fer pour fournir une pastille d'oxyde de fer revêtue ayant un indice de collage inférieur ou égal à environ 5% ;
(c) introduire la pastille d'oxyde de fer revêtue dans un four vertical ; et
(d) réduire la pastille d'oxyde de fer revêtue dans le four vertical pour métalliser l'oxyde de fer dans la pastille d'oxyde de fer revêtue d'au moins environ 92% ;
dans lequel le mélange de ciment est appliqué dans un rapport d'environ 0,4 à environ 1,0 kg de ciment/tonne de pastilles d'oxyde de fer.

2. Procédé de la revendication 1, dans lequel le mélange de ciment est appliqué dans un rapport d'environ 0,4 à environ 0,6 kg de ciment/tonne de pastilles d'oxyde de fer.

3. Procédé des revendications 1 et 2, dans lequel le mélange de ciment est appliqué dans un rapport d'environ 0,5 kg de ciment/tonne de pastilles d'oxyde de fer.

4. Procédé de l'une des revendications 1 à 3, dans lequel le mélange de ciment comprend un ciment hydraulique.

5. Procédé de la revendication 4, dans lequel le ciment est un ciment hydraulique.

6. Procédé de la revendication 5, dans lequel le ciment hydraulique est un ciment Portland.

7. Procédé de la revendication 6, dans lequel le ciment Portland est, selon la norme ASTM C-150, un ciment Portland de type I, de type IA, de type II, de type IIA, de type III, de type IIIA, de type IV ou de type V.

8. Procédé de la revendication 4, dans lequel le ciment hydraulique est un ciment hydraulique mélangé.

9. Procédé de la revendication 8, dans lequel le ciment hydraulique mélangé est un ciment hydraulique mélangé de type IP, de type IS ou de type IT(AX)(BY).

10. Procédé de l'une des revendications 1 à 7, comprenant en outre une réduction dans le four vertical à une température d'environ 995°C.

11. Procédé de l'une des revendications 1 à 10, dans lequel le mélange de ciment comprend d'environ 12 à environ 18% en poids de ciment, en particulier environ 12% en poids de ciment.

12. Procédé de l'une des revendications 1 à 11, dans lequel l'application du mélange de ciment consiste à pulvériser le mélange de ciment directement sur les pastilles d'oxyde de fer.

13. Composition pour diminuer le collage de pastilles d'oxyde de fer de réduction directe, la composition comprenant une pastille d'oxyde de fer et un mélange de ciment comprenant de l'eau et de 12% en poids à 18% en poids de ciment.

14. Composition selon la revendication 13, comprenant environ 12% en poids de ciment.

15. Particule d'oxyde de fer revêtue obtenue selon le procédé de la revendication 1, dans laquelle le ciment est présent dans un rapport d'environ 0,4 à environ 1,0 kg de ciment/tonne de pastilles d'oxyde de fer non revêtues.
